# EUROPÄISCHE PATENTANMELDUNG

(11) **EP 2 500 376 A1**
(43) Veröffentlichungstag der Anmeldung: **19.09.2012**
(21) Anmeldenummer: 11158663.2
(22) Anmeldetag: 17.03.2011
(51) Int. Cl.: C08K 3/00, C09D 5/24, B82Y 30/00

(54) **Antistatische oder elektrisch leitfähige Polyurethane**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Polyurethane, enthaltend Kohlenstoff Nanoröhrchen und ionische Flüssigkeiten. Weiter betrifft die vorliegende Erfindung ein Verfahren zur Herstellung dieser Polyurethane sowie deren Verwendung zur Herstellung von Folien, Schläuchen, Walzen, Riemen, Formteilen, beheizbare Formteilen, Beschichtungen oder Schuhsohlen.

## Beschreibung

Die vorliegende Erfindung betrifft antistatische oder elektrisch leitfähige Polyurethane, enthaltend Kohlenstoff Nanoröhrchen und ionische Flüssigkeiten. Weiter betrifft die vorliegende Erfindung ein Verfahren zur Herstellung dieser Polyurethane sowie deren Verwendung zur Herstellung von z.B. Rollen, Folien, Fußbodenbelägen, Beschichtungen, Platten, Formteilen, Profile, Walzen, Rädern, Schläuchen, Verkleidungen in Automobilen, Dichtungen, Riemen, Kabelummantelungen, Fasern, Kabelsteckern, Faltenbälgen, Dämpfungselementen, elektrisch beheizbaren Formteilen, und Schuhsohlen.

Statische Aufladungen können an elektrischen Nichtleitern oder an durch solche isolierten Gegenständen oder Personen auftreten und sind häufig unerwünscht, schädlich und teilweise gefährlich. So kann es beispielsweise bei manchen medizinischen Anwendungen oder bei der Herstellung von elektronischen Bauteilen erforderlich sein, in staubreduzierter Atmosphäre zu arbeiten. Elektrostatische Aufladungen von Personen oder Gegenständen aber führen dazu, dass an diesen Personen oder Gegenständen vermehrt Staubpartikel anhaften, welche dann in diesen Fällen zu Komplikationen führen können. Weiter kann es im Rahmen von elektrostatischen Aufladungen zu schlagartigen Entladungen kommen, wodurch beispielsweise elektronische Bauteile beschädigt werden können. In explosionsgefährdenden Bereichen können elektrostatische Entladungen sogar Explosionen verursachen. Daher wird versucht, durch Erdung die Gefahr einer elektrostatischen Aufladung zu verringern.

In vielen Fällen handelt es sich bei den elektrischen Nichtleitern um Polymere. Da diese Polymere meist nicht durch leitende Materialien ersetzt werden können, wird versucht die Leitfähigkeit der Polymere durch die Zugabe von Additiven zu erhöhen und so die betreffenden Gegenstände oder Materialien zu erden.

Antistatische Additive und antistatische Polymere sind bekannt. Beispielsweise werden in DE 3531660 antistatische Polyurethanschuhsohlen beschrieben. Die antistatische Wirkung wird durch 0,01 bis 0.3 Gew.-% chemisch gebundene Sulfonat-Gruppen erreicht. Die erreichten Durchgangswiderstände betragen <10⁸ Ωcm.

Weiter werden in EP 270 009 antistatische Polyurethanschuhsohlen beschrieben, wobei als antistatisches Additiv Natriumtriphenylborat enthalten ist.

Der Einsatz unterschiedlicher quarternärer Ammoniumsalze zur Erhöhung der Leitfähigkeit von Polymeren wird in EP 1134268 beschrieben. Es handelt sich dabei um Modifikationen handelsüblicher Antistatika wie Catafor F® oder Catafor PU® der Firma Rhodia. So werden Durchgangswiderstände von ca. 10⁷ Ωcm erreicht. Die Beispiele aus EP 1134268 lassen eine deutliche Abhängigkeit des Durchgangswiderstandes von der Luftfeuchte erkennen.

DE 3528597 beschreibt den Einsatz von Rußen als Leitfähigkeitsverbesserer. Es werden Durchgangswiderstände von 10⁷ Ωcm erreicht. Nachteilig sind hierbei die verringerte mechanische Eigenschaften bei Einsatz größerer Mengen.

WO 2010/020367 beschreibt die Verwendung von Kohlenstoff Nanoröhrchen zur Verbesserung der Leitfähigkeit von Polyurethanen. Dazu werden Kohlenstoff Nanoröhrchen in der mit Isocyanaten reaktiven Komponente oder der Isocyanatkomponente dispergiert, bevor beide Komponenten zu dem Polyurethan umgesetzt werden. Problematisch bei der Verwendung von Kohlenstoff Nanoröhrchen ist aber, dass die Viskosität der Dispersion bei einem effektiven Gehalt von Kohlenstoff Nanoröhrchen recht hoch ist.

EP 2038337 und WO 2009/010502 beschreibt die Verwendung von ionischen Flüssigkeiten zur Verbesserung der Leitfähigkeit in Polyurethanen. Hier werden Durchgangswiderstände in der Größenordnung von 10⁷ Ωcm erreicht. Weiter führt die Verwendung von größeren Mengen ionischer Flüssigkeiten meist zu Ausblühen des Additivs aus den fertigen Teilen.

Ein Nachteil des Stands der Technik ist der teilweise immer noch sehr hohe Durchgangswiderstand eines solchen Polymers von 10⁶ Ωcm und mehr und die Abhängigkeit der Durchgangswiderstände von der Luftfeuchtigkeit. Dadurch kann es trotz leitfähiger Zusätze zu statischen Aufladungen kommen.

Ein weiterer Nachteil der im Stand der Technik vorgeschlagenen antistatischen Additive ist deren teilweise mangelhafte Dauerwirkung, wodurch sich in bestimmten Fällen bereits nach wenigen Tagen der Durchgangswiderstand der Polymere erhöht. Auch können manche, die Leitfähigkeit der Polymere verbesserde Additive, insbesondere bei höheren Temperaturen, den Molekulargewichtsabbau der Polymere begünstigen, was zu einer Verschlechterung der mechanischen Eigenschaften führt.

Aufgabe der Erfindung war es daher, antistatische oder elektrisch leitfähige, Polyurethane zu liefern, deren Ausgangskomponenten technisch einfach zu den Polyurethanen verarbeitet werden könen, die einen geringen Durchgangswiderstand aufweisen und die oben geschilderten Nachteile nicht aufweisen.

Diese Aufgabe wird gelöst durch antistatische oder elektrisch leitfähige Polyurethane, die Kohlenstoff Nanoröhrchen und ionische Flüssigkeiten enthalten.

Dabei wird unter elektrisch leitfähigem Polyurethan ein Polyurethan mit einem Durchgangswiderstand von bis 10⁴ Ohm·cm verstanden und unter einem antistatischen Polyurethan ein Polyurethan mit einem Durchgangswiderstand von größer 10⁴ bis 10¹¹ Ohm·cm verstanden. Dabei wird der Durchgangswiderstand gemäß ISO 3915 bestimmt.

Polyurethan im Sinn der Erfindung umfasst alle bekannten Polyisocyanat-Polyadditionsprodukte. Diese umfassen insbesondere kompakte Polyisocyanat-Polyadditionsprodukte, wie Duromere, Polyurethan-Gießharze oder thermoplastische Polyurethane, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise werden kompakte Polyurethane oder Polyurethanintegralschaumstoffe, mehr bevorzugt kompakte Polyurethane, besonders bevorzugt Polyurethan-Gießharze, Polyurethan-Gießelastomere und thermoplastische Polyurethane, und ganz besonders bevorzugt Polyurethan-Gießharze, auch als Polyurethan-Duromere bezeichnet, und Polyurethan-Gießelastomere eingesetzt.

Eine Übersicht über Polyurethane, ihre Eigenschaften und Anwendungen wird beispielsweise im "Kunstoffhandbuch, Band 7, Polyurethane" (Carl-Hanser-Verlag, 3. Auflage 1993) gegeben.

Im Rahmen der Erfindung soll unter einem kompakten Polyurethan bzw. einem massiven Polyurethan, ein im wesentlichen von Gaseinschlüssen freier Festkörper verstanden werden. Dabei bedeutet "im Wesentlichen frei von Gaseinschlüssen", dass das Polyurethan vorzugsweise weniger als 20 Vol.-%, besonders bevorzugt weniger als 10 Vol.-%, insbesondere weniger als 5 Vol.-% und ganz besonders weniger als 2 Vol.-% Gaseinschlüsse aufweist. Dabei ist die Dichte vorzugsweise größer als 900 g/cm³, besonders bevorzugt größer 950 g/cm³ und insbesondere größer als 1000 g/cm³. Weitere Details zu erfindungsgemäßen kompakten Polyurethanen finden sich im "Kunststoffhandbuch, Band 7, Polyurethane", Carl Hanser Verlag, 3. Auflage 1993, Kapitel 8. Unter thermoplastischen Polyurethanen werden kompakte Polyurethane verstanden, die thermoplastische Eigenschaften zeigen. Dabei versteht man unter thermoplastischen Eigenschaften, dass das thermoplastische Polyurethan bei Erwärmen wiederholt aufschmelzbar ist und dabei plastisches Fließen zeigt. Weitere Details zu erfindungsgemäßen thermoplastischen Polyurethanen finden sich im "Kunststoffhandbuch, Band 7, Polyurethane", Carl Hanser Verlag, 3. Auflage 1993, Kapitel 8.2. Unter Polyurethan-Gießharzen werden kompakten Polyurethane verstanden, die durch vermischen der Rohstoffe und anschließendem Gießen der Reaktionsmischung in Formen erhalten werden. Zum Beschichten größerer Flächen werden die Gießharze ausgegossen und beispielsweise durch Rakeln verteilt. Alternativ können diese Systeme durch Sprühen aufgebracht werden. Dabei unterscheidet man zwischen nicht oder wenig chemisch vernetzten Gießelastomeren und hochvernetzten Duromeren oder Gießharzen. Weitere Details zu Polyurethan-Gießelastomeren und Polyurethan-Gießharzen finden sich im "Kunststoffhandbuch, Band 7, Polyurethane", Carl Hanser Verlag, 3. Auflage 1993, Kapitel 8.1.1 und 8.1.2

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 150 kPa, besonders bevorzugt größer gleich 180 kPa auf. Weiterhin verfügt der Polyurethan-Hartschaumstoff nach DIN ISO 4590 über eine Geschlossenzelligkeit von größer 85%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % seiner Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Polyurethanbindemittel umfassen Bindemittel für Gummigranulat, für Polyurethanhartschaumabfälle und für anorganische Produkte. Solche Bindemittel sind beispielsweise im "Kunststoffhandbuch, Band 7, Polyurethane", Carl Hanser Verlag, 3. Auflage 1993, Kapitel 12 beschrieben.

Ionische Flüssigkeiten sind allgemein bekannt, vielfach beschrieben und kommerziell erhältlich. So werden beispielsweise ionische Flüssigkeiten, die sich zur Verbesserung der Leitfähigkeit von Polyurethanen eignen, in EP 2038337 beschrieben. Dabei handelt es sich bei ionischen Flüssigkeiten um Salze der allgemeinen Formel (I) 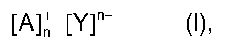 in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;

### (B) gemischte Salze der allgemeinen Formeln (II)

| | |
|---|---|
| [A¹]⁺[A²]⁺ [Y]ⁿ⁻ | (IIa), wobei n = 2; |
| [A¹]⁺[A²]⁺[A³]⁺ [Y]ⁿ⁻ | (IIb), wobei n = 3; oder |
| [A¹]⁺[A²]⁺[A³]⁺[A⁴]⁺ [Y]ⁿ⁻ | (IIc), wobei n = 4 und |

wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter (A) genannte Bedeutung besitzt; oder

### (C) gemischte Salze der allgemeinen Formeln (III)

| | |
|---|---|
| [A¹]+[A²]+[A³]+[M¹]⁺ [Y]ⁿ⁻ | (IIIa), wobei n = 4; |
| [A¹]⁺[A²]⁺[M¹]⁺[M²]⁺ [Y]ⁿ⁻ | (IIIb), wobei n = 4; |
| [A¹]⁺[M']⁺[M²]⁺[M³]⁺ [Y]ⁿ⁻ | (IIIc), wobei n = 4; |
| [A¹]⁺[A²]⁺[M¹]⁺ [Y]ⁿ⁻ | (IIId), wobei n = 3; |
| [A¹]⁺[M¹]⁺[M²]⁺ [Y]ⁿ⁻ | (IIIe), wobei n = 3; |
| [A¹]⁺[M¹]⁺ [Y]ⁿ⁻ | (IIIf), wobei n = 2; |
| [A¹]⁺[A²]⁺[M⁴]²⁺ [Y]ⁿ⁻ | (IIIg), wobei n = 4; |
| [A¹]⁺[M¹]⁺[M⁴]²⁺ [Y]ⁿ⁻ | (IIIh), wobei n = 4; |
| [A¹]⁺[M⁵]³⁺ [Y]ⁿ⁻ | (IIIi), wobei n = 4; oder |
| [A¹]⁺[M⁴]²⁺ [Y]ⁿ⁻ | (IIIj), wobei n = 3 und |

wobei [A¹]⁺, [A²]⁺ und [A³]⁺ unabhängig voneinander aus den für [A]⁺ genannten Gruppen ausgewählt sind, [Y]ⁿ⁻ die unter (A) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten.

Die im Rahmen der vorliegenden Erfindung eingesetzten ionischen Flüssigkeiten besitzen einen Schmelzpunkt von in einem Bereich von -50°C bis 150°C, mehr bevorzugt im Bereich von -20°C bis unter 100 °C und weiterhin mehr bevorzugt von -20 °C bis unter 80 °C. Besonders bevorzugt ist der Schmelzpunkt der ionischen Flüssigkeit unter 50 °C, insbesondere sind erfindungsgemäße ionische Flüssigkeiten bei Raumtemperatur flüssig. Bei Raumtemperatur flüssige Ionische Flüssigkeiten sind leicht verarbeitbar und haben eine ausgezeichnete antistatische Wirkung.

Verbindungen, die sich zur Bildung des Kations [A]⁺ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen. Die Positive Ladung kann auch in einem mesomeren System delokalisiert sein.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Heterocyclus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Als Anionen sind prinzipiell alle Anionen einsetzbar. Bevorzugt einsetzbare Anionen sind beispielsweise in EP 2038337 beschrieben.

Als Ionische Flüssigkeit im Sinn der Erfindung werden vorzugsweise Substanzen mit einem weichen Kation und/oder einem weichen Anion eingesetzt. Das bedeutet, dass Kationen und/oder Anionen gut stabilisiert sind, beispielsweise durch induktive und/oder mesomere Effekte. Kationen weisen dabei bevorzugt elektronenschiebende Substituenten auf. Vorzugsweise enthält das Kation ausschließlich elektronenschiebende Substituenten. Das Anionen weist vorzugsweise elektronenziehende Substituenten auf. Dabei wird besonders bevorzugt eine ionische Flüssigkeit eingesetzt, bei der die Ladung des Kations, des Anions oder des Kations und des Anions durch mesomere Effekte delokalisiert ist. Als Kationen sind daher Imidazolium-, Guanidinium- oder Pyrazoliumderivate, insbesondere Immidazoliumderivate, bevorzugt. Besonders bevorzugt weisen erfindungsgemäße ionische Flüssigkeiten Kationen auf, ausgewählt aus der Gruppe, enthaltend 1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium, 1,2-Dimethylpyridinium, Guanidinium, Hexamethylguanidinium, N,N,N',N'-Tetramethyl-N"-ethylguanidinium, N-Pentamethyl-N-isopropylguanidinium, N-Pentamethyl-N-propylguanidinium, Benzyltriphenylphosphonium, Tetrabutylphosphonium, Trihexyl(tetradecyl)phosphonium und Tri-isobutyl(methyl)phosphonium.

Die Anionen werden für das erfindungsgemäße Verfahren vorzugsweise ausgewählt aus der Gruppe, enthaltend Acetat, Bis(2,4,4-trimethylpentyl)phosphinat, Bis(malonato)borat, Bis(oxalato)borat, Bis(pentafluoroethyl)phosphinat, Bis(phtalato)borat, Bis(salicylato)borat, Bis(trifluoromethansulfonyl)imidat, Bis(trifluoromethyl)imidat, Borat, Bromid, Bromoaluminate, Carbonat, Chloroaluminate, Decylbenzolsulfonat, Dichlorocuprat, Dicyanamid, Didecylbenzolsulfonat, Didodecylbenzolsulfonat, Diethylphosphat, Dihydrogenphosphat, Dodecylbenzolsulfonat, Ethylsulfat, Ethylsulfonat, Fluorid, Hexafluorophosphat, Hydrogencarbonat, Hydrogenphosphat, Hydrogensulfat, Hydrogensulfit, Iodid, Methylsulfat, Methylsulfonat, Nitrat, Nitrit, Phosphat, Sulfit, Tetracyanoborat, Tetrafluoroborat, Tetrakis(hydrogensulfato)borat, Tetrakis(methylsulfonato)borat, Thiocyanat, Tosylat, Trichlorozinkat, Trifluoroacetat, Trifluoromethylsulfonat, Tris(heptafluoropropyl)trifluorophosphat, Tris(nonafluorobutyl)trifluorophosphat, Tris(pentafluoroethyl)trifluorophosphat, Tris(pentafluoroethylsulfonyl)trifluorophosphat.

Besonders bevorzugte Anionen sind Hexafluorphosphat, Tetrafluorborat, Thiocyanat und Dicyanamid, Ethylsulfat, Diethylphosphat, Methylsulfat, Bromid, Jodid, p-Toluolsulfonat und Methansulfonat, insbesondere auf Basis von Ethylsulfat, Thiocyanat oder Dicyanamid.

Vorzugsweise werden als Ionische Flüssigkeiten im Sinn der Erfindung 1-Ethyl-3-methylimidazoliumchlorid, 1- Butyl-3-methylimidazoliumchlorid, 1-Ethyl-3-methylimidazoliummethylsulfonat, 1-Butyl-3-methylimidazoliummethylsulfonat, 1-Ethyl-3-methylimidazoliumethylsulfat, 1- Butyl-3-methylimidazoliummethylsulfat, 1- Ethyl-3-methylimidazoliumdiethylphosphat, 1-Ethyl-3-methylimidazoliumdicyanamid, 1-Ethyl-3-methylimidazoliumacetat, 1-Butyl-3-methylimidazoliumacetat, 1-Ethyl-3-methylimidazoliumthiocyanat, 1- Butyl-3-methylimidazoliumthiocyanat, 1-Ethyl-3-methylimidazoliumtetrafluoroborat, 1-Butyl-3-methylimidazoliumtetrafluoroborat, 1-Ethyl-3-methylimidazoliumtrifluormethansulfonat, 1-Butyl-3-methylimidazoliumtrifluormethansulfonat, 1-Ethyl-3-methylimidazoliumbis(trifluormethansulfonyl)imid, 1-Butyl-3-methylimidazoliumbis(trifluormethansulfonyl)imid, 1-Ethyl-3-methylimidazoliumhexafluorophosphat, 1-Ethyl-3-methylimidazoliumbromid, 1-Ethyl-3-methylimidazolium-p-toluolsulfonat sowie, 1- Butyl-3-methylimidazoliumdicyanamid, 1- Butyl-3-methylimidazoliumdimethylphosphat, 1- Butyl-3-methylimidazoliumbromid, 1- Butyl-3-methylimidazolium-p-toluolsulfonat, und 1-Butyl-3-methylimidazoliumhexafluorophosphat verwendet.

Besonders bevorzugt werden als Ionische Flüssigkeiten im Sinn der Erfindung 1-Ethyl-3-methylimidazoliummethylsulfonat, 1-Ethyl-3-methylimidazoliumethylsulfat, 1-Ethyl-3-methylimidazoliumdicyanamid, 1-Ethyl-3-methylimidazoliumthiocyanat, 1-Ethyl-3-methylimidazoliumtetrafluoroborat verwendet.

Ganz besonders bevorzugt werden als Ionische Flüssigkeiten im Sinn der Erfindung 1-Ethyl-3-methylimidazoliumethylsulfat, 1-Ethyl-3-methylimidazoliumdicyanamid, 1-Ethyl-3-methylimidazoliumthiocyanat, verwendet. Insbesondere werden als ionische Flüssigkeiten 1-Ethyl-3-methylimidazoliumethylsulfat oder 1-Ethyl-3-methylimidazoliumdicyanamid verwendet.

Vorzugsweise ist die ionische Flüssigkeit im erfindungsgemäßen antistatischen oder leitfähigen Polyurethan in einer Menge von 0,001 bis 10 Gewichtsprozent, mehr bevorzugt von 0,01 bis 5 Gewichtsprozent noch mehr bevorzugt von 0,1 bis 3 Gewichtsprozent, besonders bevorzugt von 0,1 bis 2 Gewichtsprozent und insbesondere von 0,1 bis 1 Gewichtsprozent, jeweils bezogen auf das Gesamtgewicht des antistatischen oder leitfähigen Polyurethans, enthalten. Die ionische Flüssigkeit ist dabei vorzugsweise nicht kovalent an die Polymerkette des antistatischen Polymers gebunden. Dabei können die eingesetzten ionischen Flüssigkeiten einzeln oder in Form von Mischungen verwendet werden.

Kohlenstoff Nanoröhrchen, die im erfindungsgemäßen antistatischen oder elektrisch leitfähigen Polyurethan enthalten sind, liegen vorzugsweise möglichst fein verteilt vor. Unter Kohlenstoff Nanoröhrchen, auch als Carbo Nanotubes oder CNT bezeichnet, werden nach dem Stand der Technik hauptsächlich zylinderförmige Kohlenstoffröhren mit einem Durchmesser zwischen 3 und 100 nm und einer Länge, die ein Vielfaches des Durchmessers beträgt, verstanden. Diese Röhrchen bestehen aus einer oder mehreren Lagen geordneter Kohlenstoffatome und weisen einen in der Morphologie unterschiedlichen Kern auf. Diese Kohlenstoff Nanoröhrchen werden beispielsweise auch als "carbon fibrils" oder "hollow carbon fibres" bezeichnet.

In der Fachliteratur sind Kohlenstoff Nanoröhrchen seit langem bekannt. Obwohl lijima (Publikation: S. lijima, Nature 354, 56-58, 1991) allgemein als Entdecker der Nanoröhrchen bezeichnet wird, sind diese Materialien, insbesondere faserförmige Graphitmaterialien mit mehreren Graphitschichten, schon seit den 70er bzw. frühen 80er Jahren bekannt. Tates und Baker (GB 1 469 930 A1 , 1977 und EP 56004 A2) beschrieben erstmals die Abscheidung von sehr feinem faserförmigen Kohlenstoff aus der katalytischen Zersetzung von Kohlenwasserstoffen. Allerdings werden die auf Basis kurzkettiger Kohlenwasserstoffe hergestellten Kohlenstoff-Filamente nicht näher in Bezug auf ihren Durchmesser charakterisiert.

Übliche Strukturen dieser Kohlenstoff Nanoröhrchen sind solche vom Zylinder Typ. Bei den zylindrischen Strukturen unterscheidet man zwischen den einwandigen Kohlenstoff Nanoröhrchen (Single Wall Carbon Nano Tubes) und den mehrwandigen zylindrischen Kohlenstoff Nanoröhrchen (Multi Wall Carbon Nano Tubes). Gängige Verfahren zu ihrer Herstellung sind z. B. Lichtbogenverfahren (arc discharge), Laser Ablation (laser ablation), Chemische Abscheidung aus der Dampfphase (CVD-process) und Katalytisch Chemische Abscheidung aus der Dampfphase (CCVD-process).

Aus lijima, Nature 354, 1991, 56-8 ist die Bildung von Kohlenstoffröhrchen im Lichtbogenverfahren bekannt, die aus zwei oder mehr Graphitlagen bestehen und zu einem nahtlos geschlossen Zylinder aufgerollt und ineinander geschachtelt sind. Abhängig vom Aufrollvektor sind chirale und achirale Anordnungen der Kohlenstoffatome im Verhältnis zu der Längsachse der Kohlenstofffaser möglich.

Strukturen von Kohlenstoffröhrchen, bei denen eine einzelne zusammenhängende Graphitlagen (sogenannter scroll type) oder unterbrochene Graphitlagen (sogenannter onion type) die Basis für den Aufbau der Nanoröhre ist, wurden erstmals von Bacon et al., J. Appl. Phys. 34, 1960, 283-90 , beschrieben. Die Struktur wird als Scroll Type bezeichnet. Später wurden entsprechende Strukturen auch von Zhou et al., Science, 263, 1994, 1744-47 und von Lavin et al., Carbon 40, 2002, 1123-30 gefunden.

Kohlenstoff Nanoröhrchen im Sinne der Erfindung sind alle einwandigen oder mehrwandigen Kohlenstoff Nanoröhrchen vom Zylinder-Typ, Scroll-Typ oder mit zwiebelartiger Struktur. Bevorzugt sind mehrwandige Kohlenstoff-Nanoröhrchen vom Zylinder-Typ, Scroll-Typ oder deren Mischungen einzusetzen.

Besonders bevorzugt werden Kohlenstoffnanoröhrchen mit einem Verhältnis von Länge zu Aussendurchmesser von größer 5, bevorzugt größer 100 verwendet.

Die einzusetzenden Kohlenstoff Nanoröhrchen, die als Agglomerate vorliegen können, weisen in der nicht agglomerierten Form vorzugsweise einen mittleren äußeren Durchmesser von 1 bis 100 nm, bevorzugt 2 bis 80 nm, besonders bevorzugt 3 bis 60 nm und insbesondere 4 bis 50 nm auf.

Neben den Kohlenstoff Nanoröhrchen vom Scroll-Typ mit nur einer durchgehenden oder unterbrochenen Graphitlage gibt es auch Kohlenstoff Nanoröhrchen -Strukturen, die aus mehreren Graphitlagen bestehen, welche zu einem Stapel zusammengefasst und aufgerollt vorliegen (Multiscroll-Typ). Diese Kohlenstoff Nanoröhrchen -Struktur verhält sich zu den Kohlenstoff Nanoröhrchen vom einfachen Scroll-Typ vergleichsweise wie die Struktur mehrwandiger zylindrischer Monokohlenstoff Nanoröhrchen (cylindrical MWNT) zur Struktur der einwandigen zylindrischen Kohlenstoff Nanoröhrchen (cylindrical SWNT).

Die heute bekannten Methoden zur Herstellung von Kohlenstoff Nanoröhrchen umfassen Lichtbogen-, Laserablations- und katalytische Verfahren. Bei vielen dieser Verfahren werden Russ, amorpher Kohlenstoff und Fasern mit hohem Durchmesser als Nebenprodukte gebildet. Bei den katalytischen Verfahren kann zwischen der Abscheidung an geträgerten Katalysatorpartikeln und der Abscheidung an in-situ gebildeten Metallzentren mit Durchmessern im Nanometerbereich (sogenannte Flow-Verfahren) unterschieden werden. Bei der Herstellung über die katalytische Abscheidung von Kohlenstoff aus bei Reaktionsbedingungen gasförmigen Kohlenwasserstoffen (im Folgenden CCVD; Catalytic Carbon Vapour Deposition) werden als mögliche Kohlenstoffspender Acetylen, Methan, Ethan, Ethylen, Butan, Buten, Butadien, Benzol und weitere, Kohlenstoff enthaltende Edukte genannt. Bevorzugt werden daher Kohlenstoff Nanoröhrchen erhältlich aus katalytischen Verfahren, eingesetzt.

Die Katalysatoren beinhalten in der Regel Metalle, Metalloxide oder zersetzbare bzw. reduzierbare Metallkomponenten. Beispielsweise sind im Stand der Technik als Metalle für den Katalysator Fe, Mo, Ni, V, Mn, Sn, Co, Cu und weitere Nebengruppenelemente genannt. Die einzelnen Metalle haben meist zwar eine Tendenz, die Bildung von Kohlenstoff Nanoröhrchen zu unterstützen, allerdings werden laut Stand der Technik hohe Ausbeuten und geringe Anteile amorpher Kohlenstoffe vorteilhaft mit solchen Metallkatalysatoren erreicht, die auf einer Kombination der oben genannten Metalle basieren. Kohlenstoff Nanoröhrchen, erhältlich unter Verwendung von Mischkatalysatoren, sind folglich bevorzugt einzusetzen.

Besonders vorteilhafte Katalysatorsysteme zur Herstellung von Kohlenstoff Nanoröhrchen basieren auf Kombinationen von Metallen oder Metallverbindungen, die zwei oder mehr Elemente aus der Gruppe, bestehend aus Fe, Co, Mn, Mo und Ni, enthalten.

Die Bildung von Kohlenstoff Nanoröhrchen und die Eigenschaften der gebildeten Röhrchen hängen erfahrungsgemäß in komplexer Weise von der als Katalysator verwendeten Metallkomponente oder einer Kombination mehrerer Metallkomponenten, dem gegebenenfalls verwendeten Katalysatorträgermaterial und der Wechselwirkung zwischen Katalysator und Träger, dem Eduktgas und -partialdruck, einer Beimischung von Wasserstoff oder weiteren Gasen, der Reaktionstemperatur und der Verweilzeit bzw. dem verwendeten Reaktor ab.

Ein besonders bevorzugt einzusetzendes Verfahren zur Herstellung von Kohlenstoff Nanoröhrchen ist aus WO 2006/050903 A2, EP 1401763, EP 1594802, EP 1827680 und WO 2007033438 bekannt.

In den genannten unterschiedlichen Verfahren unter Einsatz verschiedener Katalysatorsysteme werden Kohlenstoff Nanoröhrchen verschiedener Strukturen hergestellt, die aus dem Prozess überwiegend als Kohlenstoff Nanoröhrchen Pulver entnommen werden können.

Die Herstellung von Kohlenstoff Nanoröhrchen mit Durchmessern kleiner 100 nm ist erstmals in EP-B 205 556 beschrieben. Für die Herstellung werden hier leichte (d. h. kurz- und mittelkettige aliphatische oder ein- oder zweikernige aromatische) Kohlenwasserstoffe und ein auf Eisen basierender Katalysator eingesetzt, an dem Kohlenstoffträgerverbindungen bei einer Temperatur oberhalb von 800 bis 900 °C zersetzt werden.

WO 86/03455 A1 beschreibt die Herstellung von Kohlenstoff-Filamenten, die eine zylindrische Struktur mit einem konstanten Durchmesser von 3,5 bis 70 nm, einem Aspektverhältnis (Verhältnis von Länge zu Durchmesser) von größer 100 und einer Kernregion aufweisen. Diese Fibrilen bestehen aus vielen, durchgängigen Lagen geordneter Kohlenstoffatome, die konzentrisch um die zylindrische Achse der Fibrilen angeordnet sind. Diese zylinderartigen Nanoröhrchen wurden nach einem CVD-Prozess aus kohlenstoffhaltigen Verbindungen unter Einsatz metallhaltiger Partikel bei einer Temperatur zwischen 850 °C und 1200 °C hergestellt.

Aus der WO 2007/093337 A2 ist ein Verfahren zur Herstellung eines Katalysators bekannt geworden, der für die Herstellung von konventionellen Kohlenstoff Nanoröhrchen mit zylindrischer Struktur geeignet ist. Bei Verwendung dieses Katalysators in einem Festbett werden von zylindrischen Kohlenstoff Nanoröhrchen mit einem Durchmesser im Bereich von 5 bis 30 nm in hohen Ausbeuten gewonnen.

Ein völlig anderer Weg zur Herstellung zylindrischer Kohlenstoff Nanoröhrchen wurde von O-berlin, Endo und Koyam beschrieben (Carbon 14, 1976, 133). Dabei werden aromatische Kohlenwasserstoffe, z. B. Benzen, an einem Metallkatalysator umgesetzt. Die entstandenen Kohlenstoffröhren zeigen einen gut definierten, graphitischen hohlen Kern, der ungefähr den Durchmesser des Katalysatorpartikels hat, auf dem sich weiterer weniger graphitisch geordneter Kohlenstoff befindet. Die gesamte Röhre kann durch Behandlung bei hoher Temperatur (2500 °C bis 3000 °C) graphitisiert werden

Die meisten der oben genannten Verfahren (mit Lichtbogen, Sprühpyrolyse bzw. CVD) werden heute zur Herstellung von Kohlenstoff Nanoröhrchen genutzt. Die Herstellung einwandiger zylindrischer Kohlenstoff Nanoröhrchen ist jedoch apparativ sehr aufwendig und verläuft nach den bekannten Verfahren mit sehr geringer Bildungsgeschwindigkeit und oft auch mit vielen Nebenreaktionen, die zu einem hohen Anteil an unerwünschten Verunreinigungen führen, d. h. die Ausbeute solcher Verfahren ist vergleichsweise gering. Deshalb ist die Herstellung derartiger Kohlenstoff Nanoröhrchen auch heute noch technisch extrem aufwendig. Daher werden einwandige, zylindrische Kohlenstoff-Nanoröhrchen heute vor allem für hoch spezialisierte Anwendungen in geringen Mengen zum Einsatz. Ihre Anwendung ist für die vorliegende Erfindung denkbar, aber aufgrund der derzeitigen Gegebenheiten weniger bevorzugt als die Anwendung von mehrwandigen Kohlenstoff Nanoröhrchen vom Zylinder- oder Scroll-Typ.

Die Herstellung von mehrwandigen Kohlenstoff Nanoröhrchen, in Form von ineinander geschachtelten nahtlosen zylindrischen Nanoröhrchen oder auch in Form der beschriebenen Scroll- oder Onion-Strukturen erfolgt heute kommerziell in größeren Mengen überwiegend unter Verwendung katalytischer Verfahren. Diese Verfahren zeigen üblicherweise eine höhere Ausbeute als beispielsweise die Lichtbogenverfahren und werden heute typischerweise im kg-Maßstab (einige hundert Kilo/Tag weltweit) durchgeführt. Die so hergestellten mehrwandigen-Kohlenstoff Nanoröhrchen sind in der Regel um einiges kostengünstiger als die einwandigen Nanoröhrchen.

Besonders bevorzugt werden mehrwandingen Kohlenstoffnanoröhrchen eingesetzt. Ein bevorzugtes Beispiel für solche mehrwandigen Kohlenstoffnanoröhrchen ist Nanocyl® 7000 der Firma Nanocyl SA, Belgien.

Der Gehalt an Kohlenstoff Nanoröhrchen im erfindungsgemäßen antistatischen oder elektrisch leitfähige Polyurethan liegt vorzugsweise im Bereich von 0,01 bis 15 Gew.-%, mehr bevorzugt von 0,05 bis 7 Gew.-%, noch mehr bevorzugt von 0,1 bis 5 Gew.-%, besonders bevorzugt von 0,1 bis 3 Gew.-% und inbesondere von 0,1 bis 1 Gew.-%, bezogen auf das Gesamtgewicht des antistatischen oder leitfähigen Polyurethans enthalten.

Zur Herstellung der erfindungsgemäßen antistatischen oder elektrisch leitfähigen Polyurethane werden in einer ersten Ausführungsform Polyisocyanate (a) mit Verbindungen mit mindestens zwei gegenüber Isocyanaten reaktiven Wasserstoffatomen und einem Molekulargewicht von mindestens 350 g/mol (b), Kohlenstoff Nanoröhrchen (c), ionische Flüssigkeit (d), gegebenenfalls niedermolekularen Kettenverlängerungsmitteln und/oder Vernetzungsmitteln (e), gegebenenfalls Katalysatoren (f), gegebenenfalls Treibmitteln (g) und gegebenenfalls sonstigen Zusatzstoffen (h) zu einer Reaktionsmischung vermischt und zum antistatischen oder elektrisch leitfähigen Polyurethan umsetzt. Dabei handelt es sich im Rahmen der Erfindung bei einem Reaktionsumsatz, bezogen auf die Isocyanatgruppen, von kleiner 90 % von einer Reaktionsmischung und bei einem Reaktionsumsatz von größer 90 % um ein Polyurethan.

Die zur Herstellung der erfindungsgemäßen antistatischen oder elektrisch leitfähige Polyurethane verwendete Polyisocyanatkomponente (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt wird 4,4'-MDI, Polymer-MDI und/oder HDI verwendet. Das besonders bevorzugt verwendete 4,4'-MDI kann geringe Mengen, bis etwa 10 Gew.-%, uretdion-, allophanat- oder uretoniminmodifizierte Polyisocyanate enthalten. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden.

Polyole (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polyole auch die nachfolgend unter (b) beschriebenen Polyole eingesetzt werden.

Gegebenenfalls können der Umsetzung zum Polyisocyanatprepolymer noch Kettenverlängerungsmittel (a-3) zugegeben werden. So können beispielsweise alle unter Komponente (e) beschriebenen Kettenverlängerungsmittel eingesetzt werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Propylenoxid, besonders geeignet.

Als Verbindungen mit mindestens zwei gegenüber Isocyanaten reaktiven Wasserstoffatomen (b) und einem Molekulargewicht von mindestens 350 g/mol können alle zur Polyurethanherstellung bekannten Verbindungen mit mindestens zwei reaktiven Wasserstoffatomen und einem Molekulargewicht von mindestens 350 g/mol eingesetzt werden. Diese weisen beispielsweise eine Funktionalität von 2 bis 8 und einem Molekulargewicht von 400 bis 12000 auf. So können beispielsweise Polyetherpolyamine und/oder Polyole, ausgewählt aus der Gruppe der Polyetherpolyole, Polyesterpolyole oder Mischungen daraus, verwendet werden.

Die bevorzugt zur Anwendung kommenden Polyole sind Polyetherole und/oder Polyesterole mit Molekulargewichten zwischen 400 und 12000, bevorzugt 450 bis 6000, insbesondere 500 bis weniger als 3000, und bevorzugt einer mittleren Funktionalität von 2 bis 6, bevorzugt 2 bis 4, besonders bevorzugt 2 bis 3, insbesondere 2.

Die erfindungsgemäß verwendbaren Polyetherole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalisator eingesetzt werden, beispilsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon.

Als Polyetherol kann weiterhin Polytetrahydrofuran (Poly-THF-Polyole) eingesetzt werden. Dabei beträgt das zahlenmittlere Molekulargewicht des Polytetrahydrofurans üblicherweise 550 bis 4000 g/mol, bevorzugt 750 bis 3000 g/mol, besonders bevorzugt 800 bis 2500 g/mol.

Die Polyetherpolyole können einzeln oder in Form von Mischungen verwendet werden.

Polyesterole werden z.B. hergestellt aus Alkandicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Versterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Die bevorzugt zur Anwendung kommenden Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol, Triole mit 3 bis 6 Kohlenstoffatomen, wie z.B. Glycerin und Trimethylolpropan und als höherwertiger Alkohol Pentaerythrit. Je nach den gewünschten Eigenschaften können die mehrwertigen Alkohole allein oder gegebenenfalls in Mischungen untereinander verwendet werden.

Als Polyole können beispielsweise auch Polyetherpolyamine und/oder weitere Polyole, ausgewählt aus der Gruppe der Polythioetherpolyole, Polyesteramide, hydroxylgruppenhaltigen Polyacetalen und hydroxylgruppenhaltigen aliphatischen Polycarbonaten und Acrylaten oder Mischungen aus mindestens zwei der genannten Polyole verwendet werden.

Als Kohlenstoff Nanoröhrchen (c) können alle bekannten Kohlenstoff-Nanoröhrchen, wie die oben beschriebenen Kohlenstoff-Nanoröhrchen, eingesetzt werden. Besonders bevorzugt werden mehrwandingen Kohlenstoffnanoröhrchen (multi wall CNTs) als Kohlenstoffnanoröhrchen eingesetzt. Der Gehalt an Kohlenstoff Nanoröhrchen (c), bezogen auf das Gesamtgewicht der Komponenten (a) bis (h) liegt vorzugsweise im Bereich von 0,01 bis 15 Gew.-%, mehr bevorzugt von 0,05 bis 7 Gew.-%, noch mehr bevorzugt von 0,1 bis 5 Gew.-%, besonders bevorzugt von 0,1 bis 3 Gew.-% und inbesondere von 0,1 bis 1 Gew.-%.

Damit die eingesetzten Kohlenstoff Nanoröhrchen (c) die Leitfähigkeit des Polyurethans möglichst effektiv erhöhen, müssen diese möglichst fein verteilt vorliegen. Dies erfolgt üblicherweise durch dispergieren in einem Dispergiermittel. Dabei wird eine möglichst feine Verteilung erreicht, wenn das Dispergieren unter Einsatz möglichst großer Scheerkräfte erfolgt, beispielsweise in einem Rührreaktor bei einer Leistungsdichte von größer 10² bis 10¹⁴ kW/m³, bevorzugt 10³ bis 10¹³ kw/m³. Als Dispersionsmittel können übliche, gegenüber den Kohlenstoff Nanoröhrchen inerte Lösungsmittel dienen. Vorzugsweise werden als Dispergiermittel flüssige Verbindungen der Komponenten a) bis h), beispielsweise a), b) oder e) und Mischungen, enthaltend eine oder mehrere dieser Verbindungen eingesetzt. Besonders bevorzugt werden als Dispersionsmittel die Verbindungen mit mindestens zwei gegenüber Isocyanaten reaktiven Wasserstoffatomen und einem Molekulargewicht von mindestens 350 g/mol (b) sowie Mischungen, enthaltend diese Verbindungen (b) ganz oder teilweise und gegebenenfalls eine oder mehrere der Komponenten (c) bis (h) eingesetzt. Weiter ist es auch möglich, dass Polyisocyanate (a) als Dispergiermittel eingesetzt werden. Gegebenenfalls kann neben diesen Komponenten auch ein weiteres Dispersionsmittel, wie beispielsweise ein übliches Lösungsmittel, und/oder ein Emulgator eingesetzt werden. Dabei können als Emulgatoren übliche amphiphile Moleküle, beispielsweise Tenside, eingesetzt werden. Vorzugsweise wird als Dispersionsmittel ein Teil oder der gesamte Anteil der Komponente (b), gegebenenfalls in Mischung mit weiteren Komponenten (c) bis (h) eingesetzt. Besonders bevorzugt wird die Dispersion erhalten, indem man die Kohlenstoff Nanoröhrchen (c) die Verbindungen mit mindestens zwei gegenüber Isocyanaten reaktiven Wasserstoffatomen und einem Molekulargewicht von mindestens 350 g/mol (b) und ionische Flüssigkeiten (d) vorlegt und gemeinsam dispergiert.

Die Dispergierung kann beispielsweise in mechanischen Dispergiervorrichtungen, vorzugsweise in Dispergiermaschinen mit hohen örtlichen Energiedichten, z.B. 10 bis 3000 kW/m³, mit Mahlkörpern, wie z.B. Rührwerkskugelmühlen, Sandmühlen, Netsch-Mühlen, Kolloidmühlen, Perl-Mühlen, Dyno-Mühlen, Planetenkugelmühlen und Kesselmühlen sowie Reibwalzen oder Henschel-Mischern durchgeführt werden. Als Mahlkörper kommen vorzugsweise kugelförmige Mahlkörper in Betracht, die beispielsweise aus Glas, Keramik, Metall, hartem abriebfestem Kunststoff z.B. Polyamid, sein können und deren Durchmesser zwischen 0,2 bis 8, vorzugsweise 0,4 bis 5 mm beträgt. Feinteilige Dispersionen von Kohlenstoff Nanoröhrchen im Dispergiermittel können auch mit Hilfe von Ultraturraxen oder Ultraschallmischern hergestellt werden. Solche Mischer und Mischverfahren sind beispielsweise beschrieben in "Formulierungstechnik, Hans Mollet, Arnold Grubenmann, Wiley-VCH, 2000, insbesondere Im Kapitel 5.3.2.

Als ionische Flüssigkeit (d) werden zur Herstellung der erfindungsgemäßen antistatischen oder leitfähigen Polyurethane die oben definierten ionischen Flüssigkeiten eingesetzt. Dabei beträgt der Anteil der ionischen Flüssigkeit (d) vorzugsweise 0,001 bis 10 Gewichtsprozent, mehr bevorzugt von 0,01 bis 5 Gewichtsprozent noch mehr bevorzugt von 0,1 bis 3 Gewichtsprozent, besonders bevorzugt von 0,1 bis 2 Gewichtsprozent und insbesondere von 0,1 bis 1 Gewichtsprozent, jeweils bezogen auf das Gesamtgewicht der Komponenten (a) bis (h).

Bei der Herstellung eines erfindungsgemäßen antistatischen oder leitfähigen Polyurethans kann ein Kettenverlängerungsmittel (e) beispielsweise zur Modifizierung der mechanischen Eigenschaften, wie der Härte, eingesetzt werden. Dabei weisen Kettenverlängerungsmittel und/oder Vernetzungsmittel (e) mindestens zwei gegenüber Isocyanaten reaktive Wasserstoffatome und einem Molekulargewicht von kleiner 350 g/mol auf. Als Kettenverlängerer (e) werden allgemein bekannte aliphatische, araliphatische, aromatische und/oder cycloaliphatische Verbindungen mit einem Molekulargewicht von 50 bis 349, bevorzugt 2-funktionelle Verbindungen, eingesetzt, beispielsweise Diamine und/oder Alkandiole mit 2 bis 10 C-Atomen im Alkylenrest, insbesondere 1,3-Propandiol, Butandiol-1,4, Hexandiol-1,6, Hydroquinone bis(2-hydroxyethyl)ether und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können. Das Gewichtsverhältnis der höhermolekularen Verbindung mit gegenüber Isocyanaten reaktiven Wasserstoffatomen (b) zu Kettenverlängerer (e), kann 0,5 : 1 bis 20 : 1, vorzugsweise 1,5 : 1 bis 13 : 1 betragen , wobei ein höherer Anteil an Kettenverlängerer zu einem härteren Produkt führt. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Die genannten Kettenverlängerungsmittel und/oder Vernetzungsmittel (e) können einzeln oder als Mischungen von gleichen oder verschiedenen Verbindungsarten verwendet werden und werden üblicherweise in Mengen von 1 bis 40 Gew.-%, bezogen auf das Gesamtgewicht der Komponenten (a), (b) und (e), eingesetzt.

Als Katalysatoren (f) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(III)-neodecanoat, Bismut-2-etyhlhexanoat und Bismutoctanoat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Die Katalysatoren können einzeln oder als Mischungen verwendet werden. Gegebenenfalls werden als Katalysatoren (f) Mischungen aus Metallkatalysatoren und basischen Aminkatalysatoren verwendet.

Insbesondere bei Verwendung eines größeren Polyisocyanatüberschusses kommen als Katalysatoren ferner in Betracht: Tris-(dialkylaminoalkyl)-s-hexahydrotriazine, vorzugsweise Tris-(N,N-dimethylaminopropyl)-s-hexahydrotriazin, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen Hydroxylgruppen.

Die Katalysatoren (f) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Ferner werden bei der Herstellung erfindungsgemäßer antistatischer oder elektrisch leitfähiger Polyurethane Treibmittel (g) eingesetzt, wenn das antistatische oder leitfähige Polyurethan als Polyurethan-Schaumstoff vorliegen soll. Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone und/oder Acetale.

Als weiteres Treibmittel können in einer Ausführungsform auch Mikrokugeln, die physikalisches Treibmittel enthalten, zugegeben werden.

Bei der Herstellung erfindungsgemäßer Verbundstoffe können weiter noch Hilfsmittel und/oder Zusatzstoffe (h) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt. Weiter können als Hilfsmittel und/oder Zusatzstoffe (h) auch weitere antistatischen Additiven eingesetzt werden. Hier können beispielsweise bekannte antistatischen Additiven, wie Catafor F® oder Catafor PU® der FirmaRhodia oder Ruß genannt werden.

Im Allgemeinen werden bei der Herstellung des erfindungsgemäßen antistatischen oder elektrisch leitfähigen Polyurethans die Polyisocyanate (a), die Verbindungen mit mindestens zwei gegenüber Isocyanaten reaktiven Wasserstoffatomen und einem Molekulargewicht von mindestens 350 g/mol (b) und gegebenenfalls die Kettenverlängerungs- und/oder Vernetzungsmittel (e) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (e) und gegebenenfalls (g) und (h) 0,1 bis 1,5:1, vorzugsweise 0,70 bis 1,4:1 beträgt. Falls die Polyurethane zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b), (e) und gegebenenfalls (g) und (h) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (f) für die Herstellung von erfindungsgemäßen antistatischen oder leitfähigen Polyurethanen unterscheiden sich jeweils quantitativ und qualitativ nur geringfügig von den üblicherweise für die Herstellung dieser Polyurethane eingesetzten Ausgangsstoffe, beispielsweise wenn ein übliches Polyurethan Gießharz, thermoplastisches Polyurethan, ein üblicher Polyurethanweichschaumstoff, Polyurethanhalbhartschaumstoff, Polyurethanhartschaumstoff oder Polyurethanintegralschaumstoff hergestellt werden soll.

Dabei ist dem Fachmann bekannt, welche Variationen durchgeführt werden müssen, um die genannten Polyurethane zu erhalten. So werden beispielsweise für die Herstellung von kompakten Polyurethanen, wie Polyurethan Gießharzen oder thermoplastischen Polyurethanen, keine Treibmittel eingesetzt. Weiter lässt sich beispielsweise über die Funktionalität und die Kettenlänge der Verbindungen (b) sowie durch die Art und Menge der Verbindungen (e) die Elastizität und Härte des erfindungsgemäßen Polyurethans variieren. Solche Modifikationen sind dem Fachmann bekannt.

Herstellung sowie Edukte für die Herstellung eines Polyurethan Gießharzes sind beispielsweise beschrieben in DE 3528597, Herstellung sowie Edukte für die Herstellung eines thermoplastischen Polyurethans beispielsweise in WO 2009/010502, Herstellung sowie die Edukte für die Herstellung eines Weichschaums in PCT/EP2005/010124 und EP 1529792, Herstellung sowie die Edukte für die Herstellung eines Halbhartschaums im "Kunststoffhandbuch, Band 7, Polyurethane", Carl Hanser Verlag, 3. Auflage 1993, Kapitel 5.4, Herstellung sowie die Edukte für die Herstellung eines Hartschaumstoffs in PCT/EP2005/010955 und Herstellung sowie die Edukte für Herstellung eines Integralschaumstoffs in EP 364854, US 5506275 oder EP 897402. Zu den in diesen Dokumenten beschriebenen Edukten können dann jeweils noch die ionische Flüssigkeit und die Kohlenstoff Nanoröhrchen (c) und (d) zugegeben werden, um zu erfindungsgemäßen Polyurethanen zu gelangen, wobei sich die Mengenverhältnisse der übrigen Ausgangsstoffe zueinander vorzugsweise jeweils nicht ändern. Bezüglich Herstellung und spezieller Edukte für die Herstellung von Beschichtungen und Bindemitteln ist ebenfalls auf das "Kunststoffhandbuch, Band 7, Polyurethane", Carl Hanser Verlag, 3. Auflage 1993, Kapitel 10 und 12 verwiesen.

Neben dem in der ersten Ausführungsform beschriebenen Verfahren zur Herstellung der erfindungsgemäßen antistatischen oder leitfähigen Polyurethane kann im Fall von thermoplastischen Polyurethanen auch die ionische Flüssigkeit (d) und/oder die Kohlenstoff Nanoröhrchen (c) in einer zweiten Ausführungsform direkt im thermoplastischen Polyurethan dispergiert werden. Dazu wird ein thermoplastisches Polyurethan auf üblichem Weg unter Verwendung üblicher Ausgangsmaterialien hergestellt. Gegebenenfalls kann eine der Komponenten (c) oder (d) bereits durch Zugabe zu den Ausgangsverbindungen in dem thermoplastischen Polyurethan enthalten sein. Die Herstellung von thermoplastischem Polyurethan ist beispielsweise in WO 2009/010502 beschrieben. Zu einem solchen thermoplastischen Polyurethan werden in dieser zweiten Ausführungsform die ionische Flüssigkeit (d) und/oder die Kohlenstoff Nanoröhrchen (c) dispergiert, wobei für den Fall, dass nur ionische Flüssigkeit (d) oder Kohlenstoffnanoröhrchen (c) im TPU dispergiert werden, die fehlende Substanz bereits im TPU enthalten ist. Vorzugsweise erfolgt das Dispergieren in einem Extruder bei Temperaturen oberhalb des Schmelzpunkts des thermoplastischen Polyurethans ohne Zugabe weiterer Hilfsmittel. Besonders bevorzugt werden die Kohlenstoff Nanoröhrchen (c) und die ionische Flüssigkeit (d) gemeinsam in einem Extruder in thermoplastischem Polyurethan dispergiert.

Dabei können in dieser Ausführungsform auch die Kohlenstoff Nanoröhrchen (c) und/oder die ionische Flüssigkeit (d) in Form eines Konzentrats auf Basis von thermoplastischem Polyurethan eingesetzt werden. So können die Komponenten (c) und (d) jeweils getrennt oder gemeinsam in einem Konzentrat enthalten sein. Als Matrix für die Komponenten (c) und (d) dient dabei thermoplastisches Polyurethan. Vorzugsweise enthält das Konzentrat thermoplastisches Polyurethan, 5 bis 30 Gew.-% Kohlenstoff Nanoröhrchen und 5 bis 20 Gew.-% ionische Flüssigkeit, wobei der Gehalt an thermoplastischem Polyurethan, bezogen auf das Gesamtgewicht des Konzentrats, mindestens 60 Gew.-% beträgt. Das Konzentrat wird vorzugsweise auch durch extrudieren der entsprechenden Menge an Kohlenstoff-Nanoröhrchen (c) und/oder ionischer Flüssigkeit (d) erhalten.

Die Verarbeitung des erfindungsgemäß hergestellten antistatischen oder letfähigen thermoplastischen Polyurethans, das üblicherweise als Granulat oder in Pulverform vorliegt, erfolgt nach üblichen Verfahren, wie z.B. Spritzguss oder Extrusion. Derartige Spritzguss- und Extrusionsartikel können auch aus Compounds, enthaltend das erfindungsgemäße hergestellten antistatische oder leitfähige thermoplastische Polyurethan und mindestens einen weiteren thermoplastischen Kunstoff, besonders ein Polyethylen, Polypropylen, Polyester, Polyether, Polystyrol, Polycarbonat, PVC, ABS, ASA, SAN, Polyacrylnitril, EVA, PBT, PET, Polyoxymetylen, bestehen.

Die erfindungsgemäßen antistatischen oder leitfähigen Polyurethane werden vorzugsweise zur Herstellung von tragenden oder dämpfenden Elementen eingesetzt, wie Rollen, Folien, Fußbodenbelägen, Beschichtungen, Platten, Formteilen, Profilen, Walzen, Rädern, Schläuchen, Verkleidungen in Automobilen, Automobilinnenteilen, wie Fußmatten, Lenkräder und Armstützen, Bodenbelägen und Bodenmatten für Büro- und Arbeitsbereiche, Dichtungen, Riemen, Kabelummantelungen, Fasern, Kabelsteckern, elektronischen Bauteilen, Faltenbälgen, Dämpfungselementen, Matratzen für den Operationsbereich, Armlehnen für Stühle, und Schuhsohlen. Ein weiterer großer Vorteil der erfindungsgemäßen leitfähigen oder antistatischen Polyurethane ist deren elektrische Beheizbarkeit. So kann durch Anlagen einer elektrischen Spannung ein Strom fließen, wodurch sich das Polyurethan schnell erwärmt. Dieser Effekt könnte beispielsweise für elektrisch beheizbare Formteile, wie beheizbare Lenkräder im Automobilbereich, Anwendung finden.

Schließlich kann durch Einsatz von Polyurethanen, enthaltend eine ionische Flüssigkeit und Kohlenstoff Nanoröhrchen eine deutliche Verbesserung der Leitfähigkeit gegenüber der Verwendung von ausschließlich Kohlenstoff Nanoröhrchen oder ausschließlich ionischen Flüssigkeiten als Leitfähigkeitsverbesserer erreicht werden.

Die vorteilhaften Eigenschaften der erfindungsgemäßen antistatischen oder leitfähigen Polyurethane sollen in den folgenden Beispielen verdeutlicht werden.

Ausgangskomponenten:
Polyol 1: Polyesterpolyol mit Hydroxylzahl von 55 mg KOH/g, Molekulargewicht 2040 g/mol, Funktionalität 2, hergestellt durch Umsetzung von Adipinsäure, Monoethylenglycol und 1,4-Butandiol.
Polyol 2: PolyTHF® 1000 (Firma BASF SE), Polytetrahydrofuran mit Hydroxylzahl von 112 mg KOH/g, Molekulargewicht 1000 g/mol, Funktionalität 2
Polyol 3: Polyetherpolyol mit Hydroxylzahl von 403 mg KOH/g, basierend auf Propylenoxid und Mischung aus Sucrose, Pentaerythrit und Diethylenglycol als Starter
CNT 1: Nanocyl^{®} NC7000; carbon nanotubes, Hersteller Nanocyl SA, Belgien
CNT 2: Baytubes^{®} C 150 HP; carbon nanotubes, Hersteller Bayer MaterialScience AG
IL 1: 1-Ethyl-3-Methylimidazol-Ethylsulfat
IL 2: 1-Ethyl-3-Methylimidazol-Dicyanamid
Kat 1: 33 Gew.-%-ige Lösung von 1,4-Diazabicyclo[2.2.2]octane in Dipropylenglycol

Die folgenden Dispersionen wurden mit einer Ruhrwerkskugelmühle der Fa. Getzmann (DISPERMAT^{®} AE08-C1 - APS-system) hergestellt, wobei solange dispergiert wurde, bis eine homogene Dispersion erhalten wurde. Die Dispergierqualität wurde mittels Mikroskopie überprüft. Die zum dispergieren verwendeten Glasperlen hatten einen Durchmesser von 1,25 bis 1,65 mm. Die Glasperlen und das Polyol wurden vor dem Dispergieren jeweils auf 80°C vortemperiert und das Dispergieren bei 80 °C durchgeführt. Nach der Dispergierung wurden die Glasperlen abfiltriert. Die hergestellten Dispersionen sind in Tabelle 1 angegeben:

**Tabelle 1:**

| | Polyol 1 [g] | Polyol 2 [g] | Polyol 3 [g] | CNT 1 [g] | CNT 2 [g] | IL 1 [g] |
|---|---|---|---|---|---|---|
| Dispersion 1 | 1393 | | | 7 | | |
| Dispersion 2 | 1393 | | | | 7 | |
| Dispersion 3 | 1379 | | | 7 | | 14 |
| Dispersion 4 | 1649 | | | | 17 | 34 |
| Dispersion 5 | | 1393 | | 7 | | |
| Dispersion 6 | | 1632 | | 17 | | 51 |
| Dispersion 7 | | | 2115 | 11,3 | | |

### Beispiel 1 (Vergleich):

Zu 193,82 g Dispersion 1 wurden 9,95 g 1,4-Butandiol, 0,32 g Kat 1 und 12,11 g K-Ca-Na-Zeolith-Paste zugegeben. Das erhaltene Gemisch wurde in einem Hochgeschwindigkeitsmischer 1 Minute lang gemischt und dann 30 Minuten bei 75°C belassen. 83,8 g eines handelsüblichen MDI-Prepolymers für flexible Elastomere mit einer NCO-Gehalt von 22,9% (Lupranat® MP 102) wurden mit einer Temperatur von 60°C zugegeben und nach 1 minütigem Rühren in einem Hochgeschwindigkeitsmischer in eine offene Form gegossen, reagieren gelassen und bei 60 °C zu einer Platte mit den Abmessungen 200x150x6 mm ausgehärtet. Das erhaltene Material wurde bei 60 °C 24 Stunden lang getempert. Der spezifische Durchgangswiderstand gemäß ISO 3915 wurde an einem Probekörper gemäß ISO 3915 aus dem inneren Teil der Platte bestimmt.

### Beispiel 2 (Vergleich):

Es wurde analog zu Beispiel 1 verfahren, wobei anstelle von 193,82 g Dispersion 1 191,88 g Polyol 1 und 1,95 g IL 1 eingesetzt wurden.

### Beispiel 3 (Vergleich):

Es wurde analog zu Beispiel 2 verfahren, wobei 190,58 g Polyol 1 und 3,24 g IL 1 eingesetzt wurden. Bei dieser Konzentration blüht die ionische Flüssigkeit aus dem Gießelastomer aus. Daher wurden keine elektrischen Eigenschaften gemessen.

### Beispiel 4 (Erfindung):

Es wurde analog zu Beispiel 1 verfahren, wobei anstelle von 193,82 g Dispersion 1 193,82 g Dispersion 3 eingesetzt wurden.

### Beispiel 5 (Vergleich):

Es wurde analog zu Beispiel 2 verfahren, wobei anstelle von 1,95 g IL 1 1,95 g IL2 eingesetzt wurden.

### Beispiel 6 (Vergleich):

Es wurde analog zu Beispiel 3 verfahren, wobei anstelle von 3,24 g IL1 3,24 g IL2 eingesetzt wurden. Bei dieser Konzentration an ionischer Flüssigkeit ist ein Ausblühen des Gießelastomers zu beobachten. Daher wurden keine elektrischen Eigenschaften gemessen.

### Beispiel 7 (Erfindung):

Es wurde analog zu Beispiel 1 verfahren, wobei anstelle von 193,82g Dispersion 1 191,88 g Dispersion 1 und 1,95g IL2 eingesetzt wurde.

### Beispiel 8 (Vergleich):

Es wurde analog zu Beispiel 1 verfahren, wobei anstelle von Dispersion 1 Dispersion 2 eingesetzt wurde.

### Beispiel 9 (Erfindung):

Es wurde analog zu Beispiel 1 verfahren, wobei anstelle von 193,82 g Dispersion 1 96,91 g Dispersion 4 und 96,91 g Polyol 1 eingesetzt wurden.

### Beispiel 10 (Vergleich):

Zu 124,85 g Dispersion 5 wurden 15,91 g 1,4-Butandiol, 0,25 g Kat 1 und 7,49 g K-Ca-Na-Zeolith-Paste zugegeben. Das erhaltene Gemisch wurde in einem Hochgeschwindigkeitsmischer 1 Minute lang gemischt und dann 30 Minuten bei 60°C belassen. 151,5 g eines MDI-Prepolymers für flexible Elastomere mit einer NCO-Gehalt von 18,2% auf Basis von 4,4'-MDI, carbodiimid modifiziertem 4,4'-MDI und Polytetrahydrofuran mit Hydroxylzahl von 56 mgKOH/g wurden bei einer Temperatur von 45°C zugegeben und nach 1 minütigem Rühren in einem Hochgeschwindigkeitsmischer in eine offene Form gegossen, reagieren gelassen und bei 90 °C zu einer Platte mit den Abmessungen 200x150x6 mm ausgehärtet. Das erhaltene Material wurde bei 90 °C 36 Stunden lang getempert. Der spezifische Durchgangswiderstand gemäß ISO 3915 wurde an einem Probekörper aus dem innerenTeil der Platte bestimmt.

### Beispiel 11 (Vergleich):

Es wurde analog zu Beispiel 10 verfahren, wobei anstelle von 124,85 g Dispersion 5 122,98 g Polyol 2 und 1,87 g IL1 eingesetzt wurden.

### Beispiel 12 (Erfindung)

Es wurde analog zu Beispiel 10 verfahren, wobei anstelle von 124,85 g Dispersion 5 62,42 g Dispersion 6 und 62,42 g Polyol 2 eingesetzt wurden.

### Beispiel 13 (Vergleich):

Zu 124,26 g Dispersion 7 wurden 0,13 g Kat 1 und 4,5 g K-Ca-Na-Zeolith-Paste zugegeben. Das erhaltene Gemisch wurde in einem Hochgeschwindigkeitsmischer 1 Minute lang gemischt und dann 30 Minuten bei 75°C belassen. 121,2 g von Polymer-MDI mit einem NCO-Gehalt von 31,5% (Lupranat® M 20S) wurden bei einer Temperatur von 45°C zugegeben und nach 1 minütigem Rühren in einem Hochgeschwindigkeitsmischer in eine offene Form gegossen, reagieren lassen und bei 70 °C zu einer Platte mit den Abmessungen 300x200x2 mm ausgehärtet. Aus dieser Platte wurde ein Probekörper ausgestanzt und der spezifische Durchgangswiderstand gemäß ISO 3915 bestimmt.

### Beispiel 14 (Vergleich):

Es wurde analog zu Beispiel 13 verfahren, wobei anstelle von 124,26 g Dispersion 7 123,32 g Polyol 3 und 1,28 g IL 1 und anstelle von 121,2 g Polymer-MDI 120,9 g Polymer-MDI (Lupranat® M 20S) eingesetzt wurde.

### Beispiel 15 (Vergleich):

Es wurde analog zu Beispiel 13 verfahren, wobei anstelle von 124,26 g Dispersion 7 122,04 g Polyol 3 und 3,8 g IL 1 und anstelle von 121,2 g Polymer-MDI 119,6 g Polymer-MDI (Lupranat® M 20S) eingesetzt wurde. Bei dieser Konzentration blüht die ionische Flüssigkeit aus dem Gießelastomer aus. Daher wurden keine elektrischen Eigenschaften gemessen.

### Beispiel 16 (Erfindung):

Es wurde analog zu Beispiel 13 verfahren, wobei anstelle von 124,26g Dispersion 7 123,6 g Dispersion 7 und 1,28g IL1, und anstelle von 121,2 g Polymer-MDI 120,5 g Polymer-MDI (Lupranat® M 20S) eingesetzt wurde.

Tabelle 2 zeigt zusammenfassend den Gehalt an ionischer Flüssigkeit und Kohlenstoff Nanoröhrchen in den Polyurethanen der Beispiele 1 bis 16 sowie die Ergebnisse der Durchgangswiderstandsmessung (DuWi) nach ISO 3915.

**Tabelle 2:**

| Beispiel | CNT1 | CNT2 | IL1 | IL2 | DuWi [Ωcm] |
|---|---|---|---|---|---|
| | [Gew.-%] | [Gew.-%] | [Gew.-%] | [Gew.-%] | |
| 1 | 0,32 | - | - | - | 1,0x10⁶ |
| 2 | - | - | 0,65 | - | 9,5x10⁷ |
| 3 | - | - | 1,1 | - | ausgeblüht |
| 4 | 0,32 | - | 0,65 | - | 3,1x10⁴ |
| 5 | - | - | - | 0,65 | 3,0x10⁷ |
| 6 | - | - | - | 1,1 | ausgeblüht |
| 7 | 0,32 | - | - | 0,65 | 7,0x10³ |
| 8 | - | 0,32 | - | - | 4,2x10⁷ |
| 9 | - | 0,32 | 0,65 | - | 3,0x10⁵ |
| | | | | | |
| 10 | 0,21 | - | - | - | 7,8x10⁴ |
| 11 | - | - | 0,62 | - | 3,5x10⁸ |
| 12 | 0,21 | - | 0,62 | - | 2,1x10⁴ |
| | | | | | |
| 13 | 0,26 | - | - | - | 2,8x10⁴ |
| 14 | - | - | 0,51 | - | 1,3x10¹⁵ |
| 15 | - | - | 1,52 | - | ausgeblüht |
| 16 | 0,26 | - | 0,51 | - | 1,8x10³ |

Die angegebenen Konzentrationen in Tabelle 2 sind die Gewichtsprozente, bezogen auf die gesamte Polyurethanmatrix. Dabei zeigt Tabelle 2, dass der Durchgangswiderstand durch Kombination von Kohlenstoff-Nanoröhrchen und ionischer Flüssigkeit gegenüber jeweils dem alleinigen Einsatz dieser Additive deutlich gesenkt werden kann.

In den nachfolgend beschriebenen Beispielen wurde thermoplastisches Polyurethan (TPU) Elastollan 1185 A10 verwendet. Elastollan 1185 A10 ist ein Polyurethan, aufgebaut aus Polytetrahydrofuran mit Molgewicht 1000 und 1,4-Butandiol als Diolkomponenten und MDI als Isocyanatkomponente und weist eine Härte von 85 Shore A auf.

### Beispiel 17 (Vergleich):

97 Gewichtsteile Elatstollan® 1185 A10 der Firma BASF und 3 Gewichtsteile CNT1 wurden mit einem Zweiwellenextruder extrudiert, granuliert und auf einer handelsüblichen Spritzgussmaschine zu 2 mm dicken Prüfplatten verarbeitet. Anschließend wurden Prüfkörper aus den Prüfplatten ausgestanzt und der spezifische Durchgangswiderstand gemäß ISO 3915 der Prüfkörper bestimmt.

### Beispiel 18 (Vergleich):

Durch Zugabe von 15 Gew.-% IL1 zu den üblichen Komponenten zur Herstellung von TPU in einem Reaktionsextruder wurde ein TPU-Konzentrat erhalten, das 15 Gew.-% IL1 enthält. 6,7 Gew.-Teile dieses TPU-Konzentrats und 93,3 Gew.-Teile Elatstollan® 1185 A10 der Firma BASF, wurden gemischt und auf einer handelsüblichen Spritzgussmaschine zu 2 mm dicken Prüfplatten verarbeitet. Anschließend wurden Prüfkörper aus den Prüfplatten ausgestanzt und der spezifische Durchgangswiderstand gemäß ISO 3915 der Prüfkörper bestimmt.

### Beispiel 19 (Vergleich):

80 Gew.-Teile Elatstollan® 1185 A10 der Firma BASF und 20 Gew.-Teile eines 15 Gew.-% IL1 enthaltenden Konzentrats auf Basis von thermoplastischem Polyurethan gemäß Beispiel 18 wurden gemischt und auf einer handelsüblichen Spritzgussmaschine zu 2 mm dicken Prüfplatten verarbeitet. Bei dieser Konzentration an ionischer Flüssigkeit ist am fertigen Produkt ein Ausblühen der ionischen Flüssigkeit aus dem TPU zu beobachten. Daher wurden keine Durchgangswiderstände gemessen.

### Beispiel 20 (Erfindung):

97 Gew.-Teile Elatstollan® 1185 A10 der Firma BASF und 3 Gew.-Teile CNT1 wurden in einem Zweiwellenextruder extrudiert und granuliert. 93,3 Gew.-Teile der so erhaltene Mischung werden dann mit 6,7 Gew.-Teilen des 15 Gew.-% IL1 enthaltenden Konzentrats auf Basis von thermoplastischem Polyurethan gemäß Beispiel 18 auf einer handelsüblichen Spritzgussmaschine zu 2 mm dicken Prüfplatten verarbeitet. Anschließend wurden Prüfkörper aus den Prüfplatten ausgestanzt und der spezifische Durchgangswiderstand gemäß ISO 3915 der Prüfkörper bestimmt.

Tabelle 3 zeigt zusammenfassend den Gehalt an ionischer Flüssigkeit und Kohlenstoff Nanoröhrchen in den Polyurethanen der Beispiele 17 bis 20 sowie die Ergebnisse der Durchgangswiderstandsmessung (DuWi) nach ISO 3915.

**Tabelle 3:**

| Beispiel | CNT1 [%] | IL1[%] | DuWi [Ωcm] |
|---|---|---|---|
| 17 | 3,0 | - | 9,5x10² |
| 18 | - | 1,0 | 3,4x10⁸ |
| 19 | - | 3,0 | ausgeblüht |
| 20 | 2,8 | 1,0 | 2,9x10¹ |

Die Konzentrationen in Tabelle 3 sind als Gewichtsprozent, bezogen auf das gesamte TPU, angegeben. Dabei zeigt Tabelle 3, dass der Durchgangswiderstand durch Kombination von Kohlenstoff-Nanoröhrchen und ionischer Flüssigkeit gegenüber jeweils dem alleinigen Einsatz dieser Additive deutlich gesenkt werden kann.

## Patentansprüche

1. Antistatisches oder leitfähiges Polyurethan, enthaltend Kohlenstoff Nanoröhrchen und ionische Flüssigkeit.

2. Antistatisches oder leitfähiges Polyurethan nach Anspruch 1, **dadurch gekennzeichnet, dass** der Gehalt der ionische Flüssigkeit 0,01 bis 10 Gew.-% und der Gehalt an Kohlenstoff Nanoröhrchen 0,01 bis 15 Gew.-%, jeweils bezogen auf das Gesamtgewicht des Polyurethans, beträgt.

3. Antistatisches oder leitfähiges Polyurethan nach Anspruch 1 oder 2, **dadurch gekennzeichnet, dass** die ionische Flüssigkeit ausgewählt ist aus der Gruppe, bestehend aus 1-Ethyl-3-methylimidazoliumchlorid, 1- Butyl-3-methylimidazoliumchlorid, 1-Ethyl-3-methylimidazoliummethylsulfonat, 1-Butyl-3-methylimidazoliummethansulfonat, 1-Ethyl-3-methylimidazoliumethylsulfat, 1- Butyl-3-methylimidazoliummethylsulfat, 1- Ethyl-3-methylimidazoliumdiethylphosphat, 1- Butyl-3-methylimidazoliumdimethylphosphat, 1-Ethyl-3-methylimidazoliumdicyanamid, 1- Butyl-3-methylimidazoliumdicyanamid, 1-Ethyl-3-methylimidazoliumacetat, 1-Butyl-3-methylimidazoliumacetat, 1-Ethyl-3-methylimidazoliumthiocyanat, 1- Butyl-3-methylimidazoliumthiocyanat, 1-Ethyl-3-methylimidazoliumtetrafluoroborat, 1-Butyl-3-methylimidazoliumtetrafluoroborat, 1-Ethyl-3-methylimidazoliumtrifluormethansulfonat, 1-Butyl-3-methylimidazoliumtrifluormethansulfonat, 1-Ethyl-3-methylimidazoliumbis(trifluormethansulfonyl)imid, 1-Butyl-3-methylimidazoliumbis(trifluormethansulfonyl)imid, 1-Ethyl-3-methylimidazoliumhexafluorophosphat, 1-Butyl-3-methylimidazoliumhexafluorophosphat, 1-Ethyl-3-methylimidazoliumbromid, 1- Butyl-3-methylimidazoliumbromid, 1-Ethyl-3-methylimidazolium-p-toluolsulfonatund 1- Butyl-3-methylimidazolium-p-toluolsulfonat.

4. Antistatisches oder leitfähiges Polyurethan nach einem der Ansprüche 1 bis 3, **dadurch gekennzeichnet, dass** die ionische Flüssigkeit ausgewählt ist aus der Gruppe, bestehend aus 1-Ethyl-3-methylimidazoliummethylsulfonat, 1-Ethyl-3-methylimidazoliumethylsulfat, 1-Ethyl-3-methylimidazoliumdicyanamid, 1-Ethyl-3-methylimidazoliumthiocyanat, 1-Ethyl-3-methylimidazoliumtetrafluoroborat.

5. Antistatisches oder leitfähiges Polyurethan nach einem der Ansprüche 1 bis 4, **dadurch gekennzeichnet, dass** die Kohlenstoff Nanoröhrchen als mehrwandige Kohlenstoff Nanoröhrchen vorliegen.

6. Antistatisches oder leitfähiges Polyurethan nach einem der Ansprüche 1 bis 5, **dadurch gekennzeichnet, dass** das Polyurethan ein kompaktes Polyurethan ist.

7. Antistatisches oder leitfähiges Polyurethan nach Anspruch 6, **dadurch gekennzeichnet, dass** das Polyurethan ein thermoplastisches Polyurethan ist.

8. Antistatisches oder leitfähiges Polyurethan nach Anspruch 6, **dadurch gekennzeichnet, dass** das Polyurethan ein Polyurethan-Gießharze oder ein Polyurethan-Gießelastomer ist.

9. Antistatisches oder leitfähiges Polyurethan nach Anspruch 1 bis 5, **dadurch gekennzeichnet, dass** das Polyurethan ein zelliges Polyurethan ist.

10. Verwendung von antistatischem oder leitfähigem Polyurethan, erhältlich nach dem Verfahren gemäß einem Anspruche 1 bis 9, zur Herstellung von Folien, Schläuchen, Walzen, Riemen, Formteilen, beheizbare Formteilen, Beschichtungen oder Schuhsohlen.

11. Verfahren zur Herstellung eines antistatischem oder leitfähigem Polyurethan nach einem der Ansprüche 1 bis 10, wobei man
a) Polyisocyanate mit
b) Verbindungen mit mindestens zwei gegenüber Isocyanaten reaktiven Wasserstoffatomen und einem Molekulargewicht von mindestens 350 g/mol,
c) Kohlenstoff Nanoröhrchen
d) ionische Flüssigkeit,
e) gegebenenfalls niedermolekularen Kettenverlängerungsmitteln und/oder Vernetzungsmitteln,
f) Katalysatoren
g) gegebenenfalls Treibmitteln und
h) gegebenenfalls sonstigen Zusatzstoffen,
zu einer Reaktionsmischung vermischt und diese zum Polyurethan umsetzt.

12. Verfahren nach Anspruch 11, **dadurch gekennzeichnet, dass** die Kohlenstoff Nanoröhrchen vor dem Herstellen der Reaktionsmischung in einer Flüssigkeit dispergiert vorliegen.

13. Verfahren nach Anspruch 12, **dadurch gekennzeichnet, dass** die Flüssigkeit die Verbindungen mit mindestens zwei gegenüber Isocyanaten reaktiven Wasserstoffatomen und einem Molekulargewicht von mindestens 350 g/mol (b) oder die Polyisocyanate (a) oder in Mischungen, die mindestens die Komponenten (a) oder mindestens die Komponente (b) enthalten, dispergiert werden.

14. Verfahren zur Herstellung von antistatischem oder leitfähigem Polyurethan nach Anspruch 7, wobei man Kohlenstoff Nanoröhrchen (c) und/oder ionische Flüssigkeiten (d) in einem thermoplastischen Polyurethan dispergiert.

15. Konzentrat, enthaltend Thermoplastischen Polyurethan, 5 bis 30 Gew.-% Kohlenstoff Nanoröhrchen und 5 bis 20 Gew.-% ionische Flüssigkeit.
